# EUROPÄISCHE PATENTSCHRIFT

(11) **EP 1 576 311 B1**
(45) Veröffentlichungstag und Bekanntmachung des Hinweises auf die Patenterteilung: **01.08.2007**
(21) Anmeldenummer: 03789171.0
(22) Anmeldetag: 08.12.2003
(51) Int. Cl.: F16L 33/26, F16L 25/00

(54) **KUPPLUNG FÜR STAHLWENDELSCHLÄUCHE**
COUPLING FOR A STEEL SPIRAL FLEXIBLE HOSE
COUPLAGE POUR TUYAUX FLEXIBLES A SPIRALES EN ACIER

(30) Priorität: 23.12.2002 DE 10261557
(43) Veröffentlichungstag der Anmeldung: 21.09.2005
(73) Patentinhaber: Weinhold, Karl Dipl.-Ing. (FH), D-41464 Neuss (DE)
(72) Erfinder: Weinhold, Karl Dipl.-Ing. (FH), D-41464 Neuss (DE)
(74) Vertreter: Thielmann, Andreas
(86) Internationale Anmeldenummer: PCT/EP2003/013890
(87) Internationale Veröffentlichungsnummer: WO 2004/059203

(56) Entgegenhaltungen:
- EP-A- 1 153 236
- DE-C- 881 287

## Beschreibung

Die Erfindung betrifft eine Kupplung für Stahlwendelschläuche mit einer aus wenigstens zwei Teilschalen gebildeten, einen Schlauch umfassenden und als Klemmbacke ausgebildeten Klemmschelle, die eine einen auf eine Tülle aufgeschobenen Stahlwendelschlauch formschlüssig umgreifende Innenkontur aufweist.

Kupplungen für Schläuche sind in vielerlei Ausführungen bekannt. Eine Kupplung für Stahlwendelschläuche, also solche Schläuche, die in ihrem Inneren einen zur Versteifung dienenden spiralförmigen Stahldraht aufweisen, ist beispielsweise aus der EP 1 153 236 B1 bekannt. Diese auf den Anmelder der vorliegenden Pantentanmeldung zurückgehende Kupplung besitzt eine Klemmschelle, die in einem Stück aus Kunststoff gespritzt ist, wobei in das Klemmschellenteil ein mit einer entsprechenden Steigung versehenes Rundgewinde eingespritzt ist. Diese bekannte Kupplung ist dahingehend nachteilig, dass die Klemmschelle nur für einen ganz bestimmten Schlauch mit einer ganz bestimmten Stahlwendelsteigung geeignet ist. Da es auf dem Markt unterschiedliche Stahlwendelschlauchprodukte verschiedener Hersteller gibt und die angebotenen Schläuche eine unterschiedliche Steigung ihres Stahlwendels aufweisen, ist der Einsatzzweck der bekannten Kupplung nur auf solche Schläuche beschränkt, deren Steigung des Stahlwendels der Steigung des im Klemmschellenteil eingespritzten Rundgewindes entspricht.

Der Erfindung liegt daher die Aufgabe zu Grunde, die eingangs genannte und zuvor näher beschriebene Kupplungsarmatur so auszugestalten und weiterzubilden, dass sie geeignet ist, mit Stahlwendelschläuchen unterschiedlichster Steigungen eingesetzt zu werden.

Diese Aufgabe wird erfindungsgemäß dadurch gelöst, eine Spirale vorgesehen ist, die den Stahlwendelschlauch im Bereich der Tülle mehrere Gänge bis zu einem Vorsprung am Ende der Klemmschelle umgreift und von der Klemmschelle axial unverschiebbar verklemmt wird.

Die Erfindung hat erkannt, dass eine universell verwendbare Kupplung dadurch geschaffen werden kann, dass im Bereich der Kupplung der spiralartige Zwischenraum am äußeren Umfang eines Stahlwendelschlauches zwischen dem Stahlwendeldraht auf einfache Weise von einer flexiblen Spirale ausgefüllt werden kann, die eine "variable Steigung" aufweist, indem sie beispielsweise aus Kunststoff gespritzt ist. Diese Spirale füllt dann bei geschlossener Kupplungsarmatur den Ringraum um den Stahlwendelschlauch zwischen Tüllenflansch und dem Vorsprung am Ende der Klemmschelle aus, so dass dieser von der als Klemmbacke ausgebildeten Klemmschelle zuverlässig eingeklemmt wird.

Damit die erfindungsgemäße Kupplung als Schnellkupplung eingesetzt werden kann, ist ein über einen Bolzen am freien Umfangsende eines der Teilschalen angeordneter Spannhebel vorgesehen, der zur kraftschlüssigen Verbindung zwischen dem Stahlwendelschlauch und der Klemmschelle über eine Schließfeder mit dem anderen freien Umfangsende der korrespondierenden Teilschale verbindbar ist. Diese Ausführungsform ist besonders zweckmäßig, da die für sich bekannte Schnellspannarmatur auch mit der neuartigen Kupplung zusammenwirkt.

Eine weitere Ausgestaltung der Erfindung sieht vor, dass die Klemmschelle aus Kunststoff gespritzt ist. Dabei können beide Teilschalen als Einzelteile hergestellt sein, es ist jedoch auch möglich, die beiden Teilschalen einstückig herzustellen, wobei die Verbindung zwischen den Teilschalen zweckmäßigerweise aus einem Filmscharnier besteht.

Wie bereits erwähnt, besteht die Spirale bevorzugt aus Kunststoff, wobei die Spirale zum Verbinden statischer Aufladung zweckmäßigerweise aus einem elektrisch leitenden Kunststoff, wie beispielsweise PEHD hergestellt wird. Bevorzugt ist sie als Endlos-Spirale ausgebildet, die dann für den jeweiligen Einsatzzweck nur noch abgelängt zu werden braucht. Es ist schnell ersichtlich, dass sich eine solche Kunststoff-Spirale sowohl der unterschiedlichen Steigung verschiedener Stahlwendel als auch - in gewissen Grenzen - unterschiedlichen Schlauchdurchmessern anpassen kann.

Nach einer weiteren vorteilhaften Ausarbeitung der Erfindung weist die Spirale einen im Wesentlichen rechteckigen Querschnitt und auf ihrer Innenseite einen mittig angeordneten stegartigen Vorsprung auf.

Um nun einen sicheren Halt zwischen Spirale und Klemmschelle zu erreichen weist die Klemmschelle eine Innenkontur auf, die einen formschlüssige Verbindung zulässt. Anders als bei der bekannten Kupplungsarmatur ist dieser Formschluss jedoch unabhängig von der Form des einzuklemmenden Schlauchendes. Erfindungsgemäß ist es möglich, dass die Innenkontur der Teilschale-konzentrisch oder gewindeartig verlaufende Stege aufweist, die bevorzugt einen dreieckigen Querschnitt aufweisen und sich beim Klemmvorgang in das Kunststoffmaterial der verwendeten Spirale hineinpressen, so dass ein sicherer Halt des Schlauches in axialer Richtung gewährleistet ist. Alternativ ist es auch denkbar, statt der Stege eine über die Innenkontur der Klemmschelle gleichmäßig angeordnete Vielzahl von zapfen- oder noppenartigen Vorsprüngen vorzusehen.

Um nun auch eine sichere Verbindung zwischen Klemmschelle und der in das Schlauchende eingeschobenen Tülle zu erhalten, ist in bekannter Weise die Klemmschelle an ihrem einen Ende mit einer Ringnut versehen, in die ein als Ringbund ausgebildeter Flansch der Tülle eingelegt ist.

Die Erfindung wird nachfolgend anhand einer lediglich ein bevorzugtes Ausführungsbeispiel darstellenden Zeichnung näher erläutert. In der Zeichnung zeigen
- Fig. 1: eine erfindungsgemäße Kupplung in Vorderansicht
- Fig. 2: die Kupplung aus Fig. 1 in Seitenansicht in Richtung des Pfeiles II in Fig. 1,
- Fig. 3: die Kupplung aus Fig. 1 in Seitenansicht in Richtung des Pfeiles III in Fig. 1, jedoch ohne Spannhebel,
- Fig. 4A: die Kupplung aus Fig. 1 in einem Vertikalschnitt entlang der Linie IV-IV aus Fig. 1,
- Fig. 4B: eine vergrößerte Darstellung der Kupplung aus Fig. 4a,
- Fig. 5: die Klemmschelle der erfindungsgemäßen Kupplung in geöffneter Stellung in Vorderansicht und
- Fig. 6: die Klemmschelle aus Fig. 5 in Draufsicht.

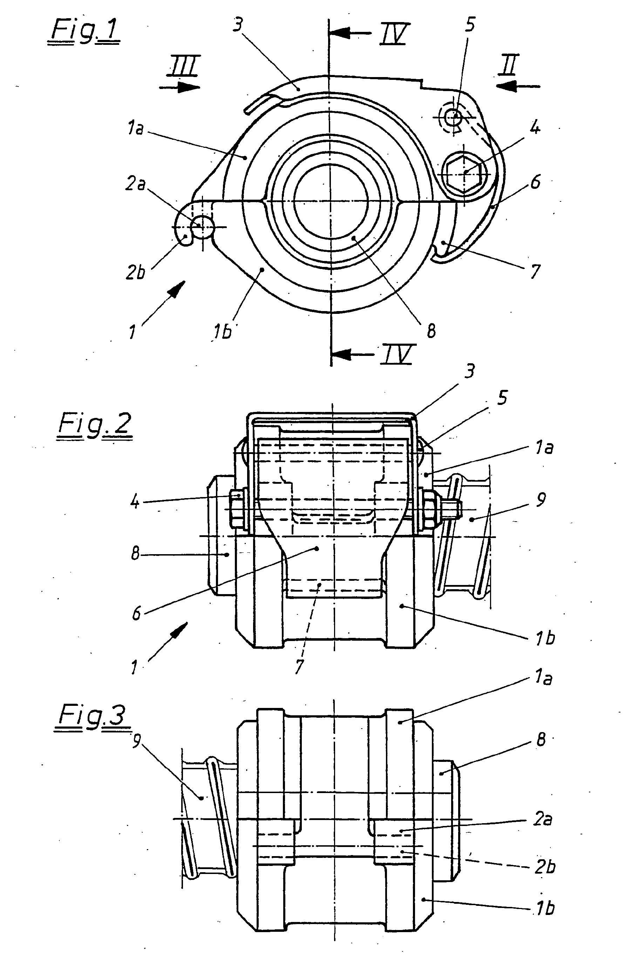

Die Fig. 1 bis 3 zeigen die erfindungsgemäße Kupplung in drei verschiedenen Ansichten. Kernstück der Kupplung ist eine Klemmschelle 1, welche im dargestellten und insoweit bevorzugten Ausführungsbeispiel aus zwei einzelnen Teilschalen 1a und 1b besteht. Wie insbesondere aus den Fig. 1 und 3 hervorgeht, sind die beiden Teilschalen gelenkig über einen Gelenk 2 miteinander verbunden, wobei ein Ende der Teilschale 1a zwei angeformte Zapfen 2a aufweist, die von einer entsprechend ausgeführten Nase 2b der Teilschale 1b einhakend umgriffen werden.

Die im bevorzugten Ausführungsbeispiel dargestellte Kupplung weist darüber hinaus eine anwendungsfreundliche Schnellspannvorrichtung auf, wobei die Klemmschelle 1 am freien Umfangsende der Teilschale 1a einen Spannhebel 3 aufweist, der mittels eines Bolzens 4 schwenkbar an der Teilschale 1a angelenkt ist, wie aus den Fig. 1 und 2 entnommen werden kann. Der Spannhebel 3 weist ferner einen Stift 5 auf, welcher zum Festlegen des Endes einer Schließfeder 6 dient. Das freie Ende der Schließfeder 6 ist dabei so ausgebildet, dass es mit einer an der Teilschale 1b angeordneten Nase 7 zusammenwirkt, um den notwendigen Schließdruck aufzubringen, wie besonders deutlich aus Fig. 1 hervorgeht.

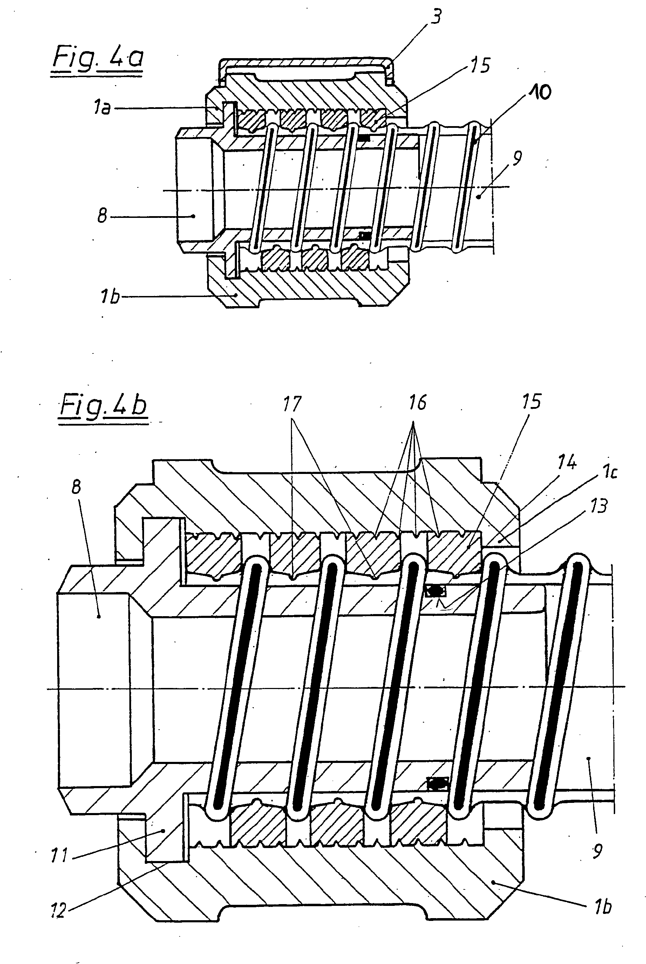

Eine Tülle 8, die in das Ende eines Stahlwendelschlauches 9 eingeschoben ist, dient zum Aufbringen der für die Befestigung notwendigen Klemmkraft. Die Funktionsweise der erfindungsgemäßen Kupplung lässt sich insbesondere in den Fig. 4a und 4b näher beschreiben. Der Stahlwendelschlauch-9 weist eine entsprechend dem darin befindlichen Stahldraht 10 ausgebildete Steigung auf, die bei Stahlwendelschläuchen verschiedener Hersteller auch bei gleichem Durchmesser unterschiedlich groß sein kann. Zur Aufnahme des notwendigen Axialzuges muss auch die Tülle 8 formschlüssig mit der Klemmschelle 1 verbunden sein. Dazu weist die Tülle 8 einen axial unverschiebbar angeordneten Flansch auf, der bevorzugt als Ringbund 11 ausgebildet ist und von einer Ringnut 12 in der Klemmschelle 1 aufgenommen wird.

Zur zuverlässigen Abdichtung zwischen Tülle 8 und Stahlwendelschlauch 9 weist die Tülle 8 eine Ringnut 13 auf, in die eine Dichtung eingelegt ist, die im dargestellten Ausführungsbeispiel als Rundschnurring 14 ausgebildet ist. Es ist klar, dass dabei der Durchmesser des Rundschnurrings 14 so auf die Ringnut 13 abgestimmt ist, dass der Rundschnurring 14 über den Außendurchmesser der Tülle 8 herausragt.

Erfindungsgemäß ist nun eine Spirale 15 vorgesehen, die den Stahlwendelschlauch 9 im Bereich der Tülle 8 mehrere Gänge bis zu einem Vorsprung 1c der Klemmschelle 1 umgreift und von der Klemmschelle 1 axial unverschiebbar verklemmt wird. Im dargestellten und insoweit bevorzugten Ausführungsbeispiel beträgt die Umschlingung 3½ Gänge und füllt damit den gesamten Innenbereich der Klemmschelle 1 aus. Dadurch, dass die Klemmschelle 1 an ihrer Innenkontur mit stegartigen Vorsprüngen 16, welche einen dreieckigen und damit zackenförmigen Querschnitt aufweisen, versehen ist, wird die bevorzugt aus einem elektrisch leitenden Kunststoff bestehende Spirale 15 beim Schließvorgang der Kupplung axial unverschieblich eingequetscht und gewährleistet dadurch den sicheren Halt der erfindungsgemäßen Kupplungsarmatur.

Den Fig. 4a und 4b ist ferner zu entnehmen, dass die Spirale einen wesentlichen rechteckigen Querschnitt aufweist und darüber hinaus mit einem auf ihrer Innenseite mittig angeordneten stegartigen Vorsprung 17 aufweist. Dadurch ist eine optimale Anpassung der Spirale auf das Ende des Stahlwendelschlauches 9 gewährleistet.

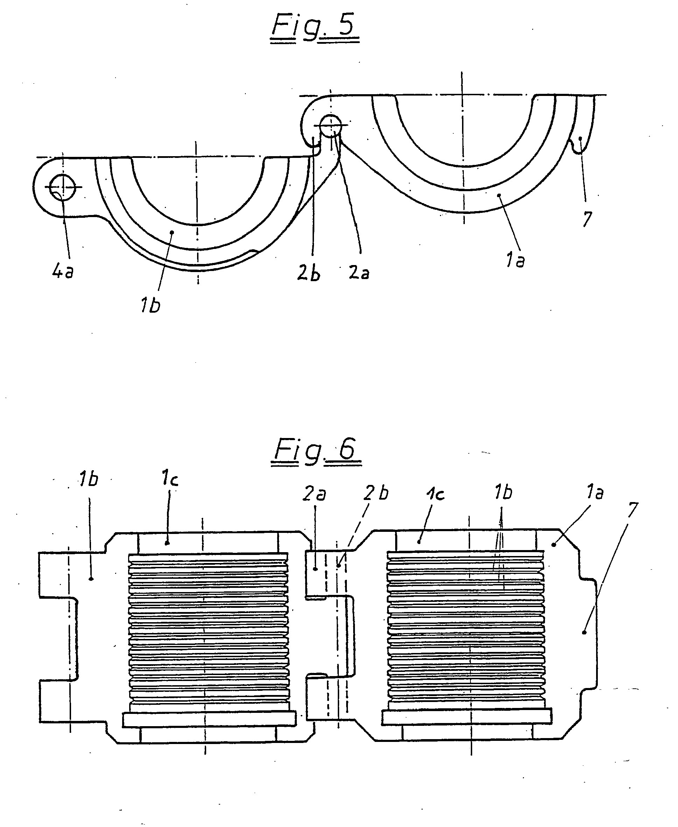

Schließlich ist in den Fig. 5 und 6 noch einmal der Aufbau der verwendeten Teilschalen 1a und 1b im Einzelnen dargestellt. Man erkennt deutlich die gelenkartige Verbindung über die Zapfen/Nase-Verbindung 2a/2b zwischen beiden Teilschalen. Auch sind am freien Ende der Teilschale 1b zwei runde Öffnungen 4a erkennbar, die zur Aufnahme des Bolzens 4 zur Anlenkung des Spannhebels 3 dienen. In der Draufsicht gemäß Fig. 6 ist auch noch einmal der umlaufenden Vorsprung 1c der Klemmschelle 1 erkennbar.

Im dargestellten Ausführungsbeispiel ist die Innenkontur der Teilschalen 1a und 1b mit konzentrischen Stegen 16 versehen, welche einen dreieckigen Querschnitt aufweisen und so eine besonders gute Klemmwirkung mit der einzulegenden Spirale erzielen. Nicht dargestellt ist, obwohl von der Erfindung mit umfasst, dass sich anstelle der konzentrischen Stege 16 auch um gewindeartig verlaufende Stege oder um eine gleichmäßig über die Innenkontur der Teilschalen 1a und 1b angeordnete zapfen- bzw. noppenartige Vorsprünge handeln kann. Wichtig ist hier nur, dass ein zuverlässiger Formschluss mit der einzuklemmenden Spirale gewährleistet ist.

## Patentansprüche

1. Kupplung für Stahlwendelschläuche mit einer aus wenigstens zwei Teilschalen (1a, 1b) gebildeten, einem Schlauch (9) umfassenden und als Klemmbacke ausgebildeten Klemmschelle (1), die eine einen auf eine Tülle (8) aufgeschobenen Stahlwendelschlauch (9) formschlüssig umgreifende Innenkontur (16) aufweist,
**dadurch gekennzeichnet, dass** eine Spirale (15) vorgesehen ist, die den Stahlwendelschlauch (9) im Bereich der Tülle (8) mehrere Gänge bis zu einem Vorsprung (1c) am Ende der Klemmschelle (1) umgreift und von der Klemmschelle (1) axial unverschiebbar verklemmt wird.

2. Kupplung nach Anspruch 1,
**gekennzeichnet durch** einen über einen Bolzen (4) am freien Umfangsende einer der Teilschalen (1b) angeordneten Spannhebel (3), der zur kraftschlüssigen Verbindung zwischen dem Stahlwendelschlauch (9) und der Klemmschelle (1) über eine Schließfeder (6) mit dem anderen freien Umfangsende (7) der korrespondierenden Teilschale (1a) verbindbar ist.

3. Kupplung nach Anspruch 1 oder 2,
**dadurch gekennzeichnet, dass** die Klemmschelle (1) aus Kunststoff gespritzt ist.

4. Kupplung nach Anspruch 3,
**dadurch gekennzeichnet, dass** die Klemmschelle (1) aus zwei Teilschalen (1a, 1b) gebildet ist.

5. Kupplung nach Anspruch 3,
**dadurch gekennzeichnet, dass** die Klemmschelle einteilig ausgeführt ist.

6. Kupplung nach einem der Ansprüche 1 bis 5,
**dadurch gekennzeichnet, dass** die Spirale (15) aus Kunststoff besteht.

7. Kupplung nach Anspruch 6,
**dadurch gekennzeichnet, dass** als Kunststoff ein elektrisch leitender Kunststoff verwendet wird.

8. Kupplung nach einem der Ansprüche 1 bis 7,
**dadurch gekennzeichnet, dass** die Spirale (15) als ablängbare Endlos-Spirale ausgeführt ist.

9. Kupplung nach einem der Ansprüche 1 bis 8,
**dadurch gekennzeichnet, dass** die Spirale (15) einen im Wesentlichen rechteckigen Querschnitt aufweist.

10. Kupplung nach einem der Ansprüche 6 bis 8,
**dadurch gekennzeichnet, dass** die Spirale (15) auf ihrer Innenseite einen mittig angeordneten stegartigen Vorsprung (17) aufweist.

11. Kupplung nach einem der Ansprüche 1 bis 10,
**dadurch gekennzeichnet, dass** die Innenkontur der Teilschalen (1a, 1b) konzentrische Stege (16) aufweist.

12. Kupplung nach einem der Ansprüche 1 bis 10,
**dadurch gekennzeichnet, dass** die Innenkontur der Teilschalen (1a, 1b) gewindeartig verlaufende Stege aufweist.

13. Kupplung nach einem der Ansprüche 1 bis 10,
**dadurch gekennzeichnet, dass** die Innenkontur der Teilschalen (1a, 1b) eine Vielzahl von zapfenartigen Vorsprüngen aufweist.

14. Kupplung nach einem der Ansprüche 11 bis 13,
**dadurch gekennzeichnet, dass** die Stege bzw. Vorsprünge einen dreieckigen Querschnitt aufweisen.

15. Kupplung nach einem der Ansprüche 1 bis 14,
**dadurch gekennzeichnet, dass** die Tülle (8) einen als Ringbund (11) ausgebildeten umlaufenden Flansch aufweist und dass die Teilschalen (1a, 1b) im Inneren der Klemmbacke (1) eine zur Aufnahme des Ringbundes (11) vorgesehene Ringnut (12) aufweisen.

16. Kupplung nach einem der Ansprüche 1 bis 15,
**dadurch gekennzeichnet, dass** die Tülle (8) in ihrem vom Schlauchende übergriffenen Bereich eine Ringnut (13) aufweist, in die eine Dichtung eingelegt ist.

17. Kupplung nach Anspruch 16,
**dadurch gekennzeichnet, dass** als Dichtung ein Rundschnurring (14) verwendet wird.

18. Kupplung nach einem der Ansprüche 2 bis 17,
**dadurch gekennzeichnet, dass** der Spannhebel (3) aus Edelstahl besteht.

19. Kupplung nach einem der Ansprüche 2 bis 18,
**dadurch gekennzeichnet, dass** die Schließfeder (6) an einem parallel zum Bolzen (4) angeordneten Stift (5) angelenkt ist und dass der Bolzen (4), der Stift (5) und/oder die Schließfeder (6) aus rostfreiem Stahl bestehen.

## Claims

1. Coupling for spiral wire flexible hoses having a ring clamp conformed as a clamping jaw and including at least two partial shells enclosing the sleeve, which ring clamp has an inner contour that hose in positive locking engagement a spiral wire flexible hose that is placed over a spout,
**characterized in that** a spiral (15) is provided that encircles the spiral wire flexible hose (9) several times in the area of the spout (8) up to a protrusion (1c) at the end of the ring clamp (1) and is clamped so as to be immovable axially by the ring clamp (1).

2. The coupling according to claim 1,
**characterized by** a clamping lever (3) that is attached to the free circumferential end of one of the partial shells (1b) via a bolt (4), and may be connected via a recoil spring (6) to the other free circumferential end (7) of the corresponding partial shell (1a) to create non-positive locking engagement between the steel wound sleeve (9) and the ring clamp (1).

3. The coupling according to claim 1 or 2,
**characterized in that** the ring clamp (1) is injection moulded from plastic.

4. The coupling according to claim 3,
**characterized in that** the ring clamp (1) is constructed from two partial shells (1a, 1b).

5. The coupling according to claim 3,
**characterized in that** the ring clamp is designed as a single part.

6. The coupling according to any of claims 1 to 5,
**characterized in that** the spiral (15) is made from plastic.

7. The coupling according to claim 6,
**characterized in that** an electrically conductive plastic is used as the plastic.

8. The coupling according to any of claims 1 to 7,
**characterized in that** the spiral (15) is designed as an endless spiral that can be shortened.

9. The coupling according to any of claims 1 to 8,
**characterized in that** the spiral (15) has an essentially rectangular cross-section.

10. The coupling according to any of claims 6 to 8,
**characterized in that** the spiral (15) is furnished on its inside with a centrally located ridge-like protrusion (17).

11. The coupling according to any of claims 1 to 10,
**characterized in that** the inner contour of the partial shells (1a, 1b) has concentric ridges (16).

12. The coupling according to any of claims 1 to 10,
**characterized in that** the inner contour of the partial shells (1a, 1b) has ridges running in the manner of a thread.

13. The coupling according to any of claims 1 to 10,
**characterized in that** the inner contour of the partial shells (1a, 1b) has a plurality of peg-like projections.

14. The coupling according to any of claims 11 to 13,
**characterized in that** the ridges or projections have a triangular cross-section.

15. The coupling according to any of claims 1 to 14,
**characterized in that** the spout (8) has a flange conformed as an annular flange (11) and that the partial shells (1a, 1b) have an annular groove (12) inside the clamping jaw (1) provided to accommodate the annular flange (11).

16. The coupling according to any of claims 1 to 15,
**characterized in that** the spout (8) has an annular groove (13) in which a seal is inserted in the area over which the sleeve end is placed.

17. The coupling according to claim 16,
**characterized in that** an O-ring cord (14) is used as a seal.

18. The coupling according to claims 2 to 17,
**characterized in that** the clamping lever (3) is made from stainless steel.

19. The coupling according to claims 2 to 18,
**characterized in that** the recoil spring (6) is articulated on a pin (5) arranged parallel to bolt (4) and that the bolt (4), the pin (5) and/or the recoil spring are made from rustproof steel.

## Revendications

1. Raccord pour tuyaux à spirales d'acier avec un collier de serrage (1), formé par au moins deux coquilles partielles (1a, 1b), entourant un tuyau (9), et réalisé en tant que mâchoire de serrage, qui présente un contour intérieur (16) qui entoure par complémentarité de forme le tuyau à spirale d'acier (9) glissé sur une douille (8),
**caractérisé en ce qu'**est prévue une spirale (15) qui entoure le tuyau à spirale d'acier (9), dans la région de la douille (8), à plusieurs pas d'une saillie (1c), à l'extrémité du collier de serrage (1), et est serré, sans déplacement axial, par ledit collier de serrage (1).

2. Raccord selon la revendication 1,
**caractérisé en ce que**, par un boulon (4), est agencé, à l'extrémité circonférentielle libre de l'une des coquilles partielles (1b), un levier de serrage (3) qui peut être relié à l'autre extrémité circonférentielle (7) de la coquille partielle correspondante (2a), à l'aide d'un ressort de serrage (6), pour le raccordement par force entre le tuyau à spirale d'acier (9) et le collier de serrage (1).

3. Raccord selon revendication 1 ou 2,
**caractérisé en ce que** le collier de serrage (1) est réalisé en matière plastique, par injection.

4. Raccord selon la revendication 3,
**caractérisé en ce que** le collier de serrage (1) est formé par deux coquilles partielles (1a, 1b).

5. Raccord selon la revendication 3,
**caractérisé en ce que** le collier de serrage (1) est exécuté d'une pièce.

6. Raccord selon l'une des revendications 1 à 5,
**caractérisé en ce que** la spirale (15) est en matière plastique.

7. Raccord selon la revendication 6,
**caractérisé en ce que**, comme matière plastique, on utilise une matière plastique conductrice d'électricité.

8. Raccord selon l'une des revendications 1 à 7,
**caractérisé en ce que** la spirale (15) est réalisée en tant que spirale sans fin pouvant être coupée à longueur.

9. Raccord selon l'une des revendications 1 à 8,
**caractérisé en ce que** la spirale (15) présente une section transversale sensiblement rectangulaire.

10. Raccord selon l'une des revendications 6 à 8,
**caractérisé en ce que** la spirale (15) présente, sur sa face intérieure, une saillie (17) en forme de nervure, disposée centralement.

11. Raccord selon l'une des revendications 1 à 10,
**caractérisé en ce que** le contour intérieur des coquilles partielles (1a, 1b) présente des nervures (16) concentriques.

12. Raccord selon l'une des revendications 1 à 10,
**caractérisé en ce que** le contour intérieur des coquilles partielles (1a, 1b) présente des nervures (16) évoluant à la manière d'un filetage.

13. Raccord selon l'une des revendications 1 à 10,
**caractérisé en ce que** le contour intérieur des coquilles partielles (1a, 1b) présente un grand nombre de saillies genre chevilles.

14. Raccord selon l'une des revendications 11 à 13,
**caractérisé en ce que** les nervures respectivement les saillies présentent une section transversale triangulaire.

15. Raccord selon l'une des revendications 1 à 14,
**caractérisé en ce que** la douille (8) présente une bride circonférentielle, configurée en tant que collet annulaire (11), et que les coquilles partielles (1a, 1b) présentent, à l'intérieur de la mâchoire de serrage (1), une gorge annulaire (12) qui est prévue pour la réception du collet annulaire (11).

16. Raccord selon l'une des revendications 1 à 15,
**caractérisé en ce que** la douille (8) présente, dans sa zone recouverte par l'extrémité du tuyau, une gorge annulaire (13) dans laquelle est logé un joint d'étanchéité.

17. Raccord selon la revendication 16,
**caractérisé en ce que**, comme joint d'étanchéité, on utilise un joint torique (14).

18. Raccord selon l'une des revendications 2 à 17,
**caractérisé en ce que** le levier de serrage (3) est en acier spécial.

19. Raccord selon l'une des revendications 2 à 18,
**caractérisé en ce que** le ressort de fermeture (6) est articulé sur une goupille (5), disposée parallèlement par rapport au boulon (4), et **en ce que** le boulon (4), la goupille (5) et / ou le ressort de serrage (6) sont en acier spécial.
